# EUROPÄISCHE PATENTSCHRIFT

(11) **EP 2 379 388 B1**
(45) Veröffentlichungstag und Bekanntmachung des Hinweises auf die Patenterteilung: **27.02.2013**
(21) Anmeldenummer: 09745022.5
(22) Anmeldetag: 28.10.2009
(51) Int. Cl.: B60T 13/74

(54) **ELEKTROMECHANISCHER BREMSKRAFTVERSTÄRKER**
ELECTROMECHANICAL BRAKE BOOSTER
SERVOFREIN ELECTROMECHANIQUE

(30) Priorität: 18.12.2008 DE 102008054852
(43) Veröffentlichungstag der Anmeldung: 26.10.2011
(73) Patentinhaber: Robert Bosch GmbH, 70442 Stuttgart (DE)
(72) Erfinder: VOLLERT, Herbert, 71665 Vaihingen/Enz (DE); WEIBERLE, Reinhard, 71665 Vaihingen/Enz (DE)
(86) Internationale Anmeldenummer: PCT/EP2009/064187
(87) Internationale Veröffentlichungsnummer: WO 2010/069658

(56) Entgegenhaltungen:
- EP-A1- 2 000 376
- DE-A1- 10 057 557
- DE-U1-202005 018 018

## Beschreibung

### Stand der Technik

Die Erfindung betrifft einen elektromechanischen Bremskraftverstärker mit den Merkmalen des Oberbegriffs des Anspruchs 1. Der Bremskraftverstärker ist insbesondere für Kraftfahrzeuge vorgesehen.

Dokument EP-2000 376-A1 offenbart einen Bremskraftverstärker dieser Gattung.

Elektromechanische Bremskraftverstärker sind bekannt. Sie weisen ein Muskelkraftübertragungselement auf, mit dem ein Hauptbremszylinder einer hydraulischen Fahrzeugbremsanlage mit Muskelkraft betätigt werden kann. Das Muskelkraftübertragungselement bekannter Bremskraftverstärker ist eine Kolbenstange, die gelenkig mit einem Fußbremspedal oder einem Handbremshebel verbunden ist und gegen einen Stangenkolben des Hauptbremszylinders drückt. Die Kolbenstange wird auch als Pedalstange bezeichnet, der Stangenkolben auch als Primärkolben. Die von einem Fahrzeugführer ausgeübte Muskelkraft wird mechanisch über das Muskelkraftübertragungselement auf den Kolben des Hauptbremszylinders übertragen.

Des Weiteren weisen die bekannten elektromechanischen Bremskraftverstärker einen elektromechanischen Aktuator auf, mit dem der Hauptbremszylinder ebenfalls betätigbar ist. Die vom elektromechanischen Aktuator ausgeübte Aktuatorkraft wird als Hilfskraft bezeichnet. Erfolgt die Bremsbetätigung ausschließlich mit dem elektromechanischen Aktuator spricht man von Fremdkraft anstatt von Hilfskraft.

Der elektromechanische Aktuator kann einen Elektromagneten, einen Linearmotor oder einen Elektromotor mit nachgeschaltetem Rotations-/Translations-Umsetzungsgetriebe aufweisen. Diese Aufzählung ist nicht abschließend.

Beispielhaft für einen elektromechanischen Bremskraftverstärker wird auf die Offenlegungsschrift DE 100 57 557 A1 hingewiesen, der eine Pedalstange und zur Muskelkraftbetätigung und wahlweise einen Elektromagneten oder einen Linearmotor zur Hilfskraftbetätigung eines Hauptbremszylinders aufweist. Der bekannte, elektromechanische Bremskraftverstärker weist eine Rückstellfeder auf, die den Bremskraftverstärker nach einer Betätigung in seine Ausgangsstellung zurückbewegt. Die Rückstellfeder kann allgemein als elastisch verformbares Element aufgefasst werden, das bei Betätigung des Bremskraftverstärkers gespannt wird und wie gesagt den Bremskraftverstärker nach einer Betätigung in seine Ausgangsstellung zurückstellt. Der bekannte Bremskraftverstärker weist eine Schraubendruckfeder als Rückstellfeder auf. Eine Federkraft der Rückstellfeder muss ausreichend groß sein, um den Bremskraftverstärker in kurzer Zeit in die Ausgangsstellung zurückzubewegen, so dass beispielsweise ein Fußbremspedal einem Fuß eines Fahrzeugführers folgt, wenn der Fahrzeugführer seinen Fuß nach einer Bremsbetätigung vom Fußbremspedal nimmt. Der Fahrzeugführer soll nicht das Gefühl bekommen, die Fahrzeugbremse löse sich nach einer Bremsbetätigung mit spürbarer Verzögerung. Auch soll sich die Fahrzeugbremsanlage nach einer Betätigung in kurzer Zeit lösen, damit das Fahrzeug wieder ungebremst rollt, was ein ebenso schnelles Lösen des Bremskraftverstärkers voraussetzt.

Bei normaler Funktion eines elektromechanischen Bremskraftverstärkers ist die Rückstellfeder kein Problem, weil die Kraft, die zum Spannen der Rückstellfeder notwendig ist, vom elektromechanischen Aktuator aufgebracht wird und nicht durch Muskelkraft aufgebracht werden muss. Bei Ausfall des elektromechanischen Aktuators muss jedoch ein Fahrzeugführer zur Bremsbetätigung die Rückstellfeder mit Muskelkraft spannen, die Federkraft der Rückstellfeder verkleinert die Betätigungskraft, mit der der Hauptbremszylinder betätigt wird, entsprechend.

### Offenbarung der Erfindung

Der erfindungsgemäße elektromechanische Bremskraftverstärker mit den Merkmalen des Anspruchs 1 weist mindestens zwei Rückstellfedern auf, deren eine das Muskelkraftübertragungselement rückstellt. Die andere Rückstellfeder bzw. die anderen Rückstellfedern stellen den Bremskraftverstärker im übrigen zurück, beaufschlagen jedoch nicht das Muskelkraftübertragungselement. Das hat den Vorteil, dass bei Ausfall des elektromechanischen Aktuators ein Fahrzeugführer den Hauptbremszylinder mit Muskelkraft nur gegen die Rückstellfeder des Muskelkraftübertragungselements betätigen muss und nicht gegen eine oder mehrere weitere Rückstellfedern, die zum Rückstellen des elektromechanischen Bremskraftverstärkers im übrigen, insbesondere also zum Rückstellen des elektromechanischen Aktuators vorhanden sind. Bei Ausfall des elektromechanischen Aktuators steht deswegen ein größerer Teil des Muskelkraft zur Betätigung des Hauptbremszylinders zur Verfügung.

Die Unteransprüche haben vorteilhafte Ausgestaltungen und Weiterbildungen der im Anspruch 1 angegebenen Erfindung zum Gegenstand.

Anspruch 2 sieht vor, dass die Rückstellfeder für das Muskelkraftübertragungselement eine kleinere Federkraft als die andere Rückstellfeder bzw. die anderen Rückstellfedern aufweist. Dadurch muss der Fahrzeugführer bei Ausfall des elektromechanischen Aktuators eine nur verhältnismäßig kleine Kraft zum Spannen der Rückstellfeder aufbringen, so dass der größte Teil der vom Fahrzeugführer zur Bremsbetätigung aufgebrachten Muskelkraft auch tatsächlich den Hauptbremszylinder betätigt.

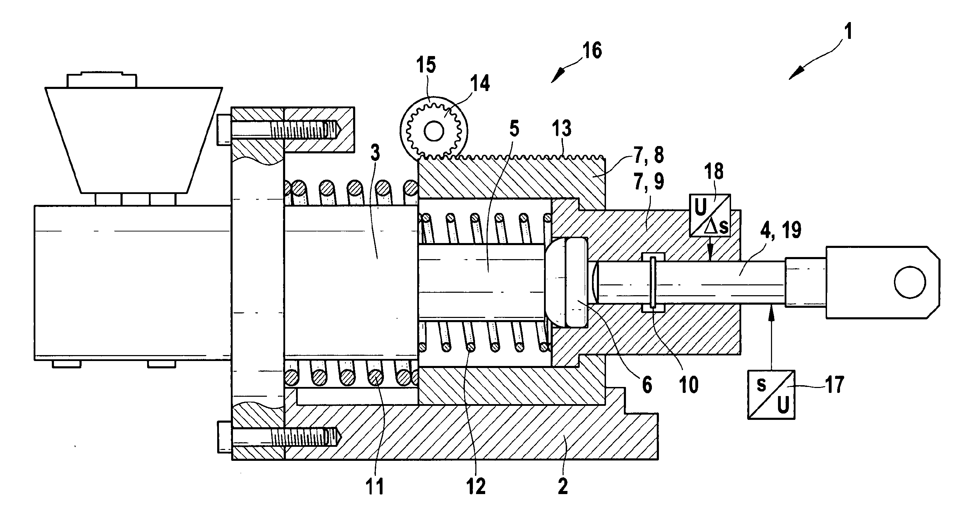

### Kurze Beschreibung der Zeichnung

Die Erfindung wird nachfolgend anhand einer in der Zeichnung dargestellten Ausführungsform näher erläutert. Die einzige Figur zeigt einen Achsschnitt eines erfindungsgemäßen elektromechanischen Bremskraftverstärkers. Die Zeichnung ist als ein vereinfachte und schematisierte Darstellung zum Verständnis und zur Erläuterung der Erfindung zu verstehen.

### Ausführungsform der Erfindung

Der in der Zeichnung dargestellte, erfindungsgemäße elektromechanische Bremskraftverstärker 1 weist ein hohlzylindrisches Gehäuse 2 auf, das an einen hydraulischen Hauptbremszylinder 3 angeflanscht ist. Koaxial im Gehäuse 2 des Bremskraftverstärkers 1 ist eine Pedalstange 4 angeordnet, die gelenkig mit einem nicht dargestellten Fußbremspedal verbindbar ist. Zwischen der Pedalstange 4 und einem Kolben 5 des Hauptbremszylinders 3 ist eine Reaktionsscheibe 6 angeordnet, über die der Kolben 5 in den Hauptbremszylinder 3 drückbar, d.h. der Hauptbremszylinder 3 und eine an ihn geschlossene, nicht dargestellte hydraulische Fahrzeugbremsanlage in an sich bekannter Weise betätigbar ist. Die Betätigung erfolgt durch Niedertreten des nicht dargestellten Fußbremspedals, also mit Muskelkraft. Die Pedalstange 4 kann allgemein auch als Muskelkraftübertragungselement 19 bezeichnet werden.

Die Pedalstange 4 ist konzentrisch in einem Verstärkerkörper 7 angeordnet, der axial verschieblich im Gehäuse 2 des Bremskraftverstärkers 1 aufgenommen ist. Der Verstärkerkörper 7 ist als zweiteiliges, teleskopierbares Rohr mit einem Au-βenrohr 8 und einem Innenrohr 9 ausgebildet, wobei die Pedalstange 4 in dem dem Hauptbremszylinder 3 fernen Innenrohr 9 des Verstärkerkörpers 7 verschiebbar aufgenommen ist. Ein Verschiebeweg der Pedalstange 4 gegenüber dem Innenrohr 9 ist durch einen Mitnehmer 10 begrenzt. Das Innenrohr 9 des Verstärkerkörpers 7 weist eine zylindrische Ansenkung auf, in der die Reaktionsscheibe 6 aufgenommen ist. Die Teleskopierbarkeit des Verstärkerkörpers 7 ermöglicht eine Verkürzung einer Baulänge des Bremskraftverstärkers 1.

Der Bremskraftverstärker 1 weist zwei Rückstellfedern 11, 12 auf, die sich beide am Hauptbremszylinder 3 abstützen. Eine stärkere Rückstellfeder 11 drückt gegen das Außenrohr 8 des Verstärkerkörpers 7, die schwächere Rückstellfeder 12 drückt gegen das Innenrohr 9 des Verstärkerkörpers 7.

Das Außenrohr 8 des Verstärkerkörpers 7 weist eine Zahnstange 13 auf, mit der ein Zahnrad 14 kämmt, das mit einem Elektromotor 15 antreibbar ist. Dem Zahnrad 14 und dem Elektromotor 15 kann ein nicht dargestelltes Untersetzungsgetriebe zwischengeschaltet sein. Die Zahnstange 13 und das Zahnrad 14 bilden ein Zahnstangengetriebe, welches eine drehende Antriebsbewegung des Elektromotors 15 in eine translatorische Bewegung zum Verschieben des Verstärkerkörpers 7 umsetzt. Über die Reaktionsscheibe 6 verschiebt der Verstärkerkörper 7 den Kolben 5 in den Hauptbremszylinder 3, d.h. betätigt den Hauptbremszylinder 3 und mit diesem die nicht dargestellte hydraulische Fahrzeugbremsanlage. Der Verstärkerkörper 7, das Zahnstangengetriebe 13, 14 und der Elektromotor 15 bilden einen elektromechanischen Aktuator 16 des elektromechanischen Bremskraftverstärkers 1.

Die Reaktionsscheibe 6 ist eine gummielastische Scheibe, die die Kräfte, welche die Pedalstange 4 und das Innenrohr 9 des Verstärkerkörpers 7 auf sie ausüben, auf den Kolben 5 des Hauptbremszylinders 3 überträgt. Sie bildet also ein Summierelement.

Zur Betätigung des Hauptbremszylinders 3 wird in an sich bekannter Weise das nicht dargestellte Fußbremspedal niedergetreten und dadurch die mit ihm verbunden Pedalstange 4 in Richtung des Hauptbremszylinders 3 verschoben. Mit einem Lagesensor 18 wird eine Relativverschiebung der Pedalstange 4 gegenüber dem Innenrohr 9 des Verstärkerkörpers 7 gemessen und mit einem nicht dargestellten elektronischen Steuergerät wird der elektromechanische Aktuator 16 geregelt. Es kann beispielsweise eine Regelung auf "Null" erfolgen, d. h. der Elektromotor 15 des Aktuators 16 wird so bestromt, dass sich das Innenrohr 9 des Verstärkerkörpers 7 ohne Relativbewegung mit der Pedalstange 4 mitbewegt. Ebenso sind ein Vor- oder ein Nachlauf des Innenrohrs 9 möglich, d. h. das Innenrohr 9 verschiebt sich weiter oder weniger weit als die Pedalstange 4. Zusätzlich kann die absolute Verschiebung der Pedalstange 4 wird mit einem Wegsensor 17 gemessen und in die elektronischen Regelung des Aktuators 16 einbezogen werden. Der Wegsensor 17 ist nicht zwingend erforderlich, eine Regelung des Aktuator 16 aussichließlich mit dem Lagesensor 18 ist ausreichend. Über die Reaktionsscheibe 6 üben die Pedalstange 4 und der Verstärkerkörper 7 eine Kraft in Richtung des Hauptbremszylinders 3 auf den Kolben 5 aus, d.h. sie betätigen den Hauptbremszylinder 3. Das Verhältnis der über die Pedalstange 4 ausgeübten Muskelkraft zu einer vom Aktuator 16 ausgeübten Aktuatorkraft, also ein Verstärkungsfaktor des elektromechanischen Bremskraftverstärkers 1, ist mit der nicht dargestellten Regelung einstellbar, wobei das Kraftverhältnis einen an sich beliebigen Verlauf über einen Verschiebeweg der Pedalstange 4 aufweisen kann. Nach Beendigung der Betätigung, wenn also keine Muskelkraft mehr auf die Pedalstange 4 ausgeübt wird, verschieben die Rückstellfedern 11, 12 den Bremskraftverstärker 1 zurück in seine dargestellte Ausgangsstellung, was als Rückstellung bezeichnet wird.

Bei Ausfall des elektromechanischen Aktuators 16 erfolgt die Betätigung des Hauptbremszylinders 3 ausschließlich per Muskelkraft. Dabei wird die Pedalstange 4 und über den Mitnehmer 10 das Innenrohr 9 des Verstärkerkörpers 7 in Richtung zum Hauptbremszylinder 3 verschoben. Über die Reaktionsscheibe 6 drückt die Pedalstange 4 gegen den Kolben 5 und betätigt den Hauptbremszylinder 3. Das Außenrohr 8 des Verstärkerkörpers 7, in dem das Innenrohr 9 verschiebbar ist, wird nicht verschoben. Deswegen wird die Rückstellfeder 11 mit der größeren Federkraft, die gegen das Außenrohr 8 des Verstärkerkörpers 7 drückt, nicht gespannt. Gespannt wird nur die Rückstellfeder 12 mit der kleineren Federkraft, die gegen das Innenrohr 9 des Verstärkerkörpers 7 drückt. Bei Ausfall des elektromechanischen Aktuators 16 muss zur Betätigung des Hauptbremszylinders 3 ausschließlich durch Muskelkraft deswegen nur die Rückfeder 12 mit der kleineren Federkraft und nicht die Rückstellfeder 11 mit der größeren Federkraft gespannt werden, es reduziert also nur die Rückstellfeder 12 mit der kleineren Federkraft die Muskelkraft, so dass bei gegebener Muskelkraft die Betätigungskraft, mit der der Kolben 5 beaufschlagt wird, größer ist als wenn beide Rückstellfedern 11, 12 gespannt werden müssten.

## Patentansprüche

1. Elektromechanischer Bremskraftverstärker, mit einem Muskelkraftübertragungselement (19), über das ein Hauptbremszylinder (3) mit Muskelkraft betätigbar ist, mit einem elektromechanischen Aktuator (16), mit dem der Hauptbremszylinder (3) ebenfalls betätigbar ist, und mit einer Rückstellfeder (11, 12), die den Bremskraftverstärker nach einer Betätigung in eine Ausgangsstellung zurückbewegt (rückstellt), **dadurch gekennzeichnet, dass** der Bremskraftverstärker (3) mindestens zwei Rückstellfedern (11, 12) aufweist, deren eine das Muskelkraftübertragungselement (19) und deren andere den Aktuator (16) rückstellt und nicht das muskelkraftübertragungselement (19) beaufschlagt wobei der Aktuator (16) einen teleskopierbaren Verstärkerkörper (7) zur Übertragung einer Aktuatorkraft des elektromechanischen Aktuators (16) auf einen Kolben (5) des Hauptbremszylinders (3) aufweist.

2. Elektromechanischer Bremskraftverstärker nach Anspruch 1, **dadurch gekennzeichnet, dass** die Rückstellfeder (12) für das Muskelkraftübertragungselement (19) eine kleinere Federkraft aufweist.

3. Elektromechanischer Bremskraftverstärker nach Anspruch 1, **dadurch gekennzeichnet, dass** der Aktuator (16) einen Elektromotor (15) und ein Rotations-/Translations-Umsetzungsgetriebe (13, 14) aufweist.

4. Elektromechanischer Bremskraftverstärker nach Anspruch 3, **dadurch gekennzeichnet, dass** der Aktuator (16) ein Zahnstangengetriebe (13, 14) als Rotations-/Translations-Umsetzungsgetriebe aufweist.

5. Elektromechanischer Bremskraftverstärker nach Anspruch 1, **dadurch gekennzeichnet, dass** der teleskopierbare Verstärkerkörper (7) aus einem Innenrohr (9) und einem Außenrohr (8) besteht.

6. Elektromechanischer Bremskraftverstärker nach Anspruch 5, **dadurch gekennzeichnet, dass** eine erste Rückstellfeder (12) gegen das Innenrohr (9) drückt und eine zweite Rückstellfeder (11) gegen das Außenrohr (8) drückt.

7. Elektromechanischer Bremskraftverstärker nach Anspruch 6, **dadurch gekennzeichnet, dass** die erste Rückstellfeder (12) sowie die zweite Rückstellfeder (11) sich beide am Hauptbremszylinder (3) abstützen.

8. Elektromechanischer Bremskraftverstärker nach Anspruch 6, **dadurch gekennzeichnet, dass** die erste Rückstellfeder (11) eine größere Federkraft aufweist als die zweite Rückstellfeder (12).

9. Elektromechanischer Bremskraftverstärker nach Anspruch 6, **dadurch gekennzeichnet, dass** bei Ausfall des Aktuators (16) die Betätigung des Hauptbremszylinders (3) ausschließlich per Muskelkraft erfolgt, wobei zur Betätigung des Hauptbremszylinders (3) per Muskelkraft nur die erste Rückstellfeder (12) gespannt wird.

## Claims

1. Electromechanical brake booster, having a muscle force transmission element (19) by means of which a master brake cylinder (3) can be activated with muscle force, having an electromechanical actuator (16) with which the master brake cylinder (3) can also be activated, and having a resetting spring (11, 12) which moves the brake booster back into a home position (resets it) after activation, **characterized in that** the brake booster (3) has at least two resetting springs (11, 12), one of which resets the muscle force transmission element (19) and the other of which resets the actuator (16) and does not act on the muscle force transmission element (19), wherein the actuator (16) has a telescopic booster body (7) for transmitting an actuator force of the electromechanical actuator (16) to a piston (5) of the master brake cylinder (3).

2. Electromechanical brake booster according to Claim 1, **characterized in that** the resetting spring (12) for the muscle force transmission element (19) has a relatively small spring force.

3. Electromechanical brake booster according to Claim 1, **characterized in that** the actuator (16) has an electric motor (15) and a rotation/translation conversion gear mechanism (13, 14).

4. Electromechanical brake booster according to Claim 3, **characterized in that** the actuator (16) has a toothed rack gear mechanism (13, 14) as a rotation/translation conversion gear mechanism.

5. Electromechanical brake booster according to Claim 1, **characterized in that** the telescopic booster body (7) is composed of an inner tube (9) and an outer tube (8).

6. Electromechanical brake booster according to Claim 5, **characterized in that** a first resetting spring (12) presses against the inner tube (9) and a second resetting spring (11) presses against the outer tube (8).

7. Electromechanical brake booster according to Claim 6, **characterized in that** the first resetting spring (12) and the second resetting spring (11) are both supported on the master brake cylinder (3).

8. Electromechanical brake booster according to Claim 6, **characterized in that** the first resetting spring (11) has a greater spring force than the second resetting spring (12).

9. Electromechanical brake booster according to Claim 6, **characterized in that** in the event of failure of the actuator (16) the master brake cylinder (3) is activated exclusively by muscle force, wherein in order to activate the master brake cylinder (3) by muscle force only the first resetting spring (12) is tensioned.

## Revendications

1. Servofrein électromécanique, comprenant un élément de transfert de la force musculaire (19) par le biais duquel un cylindre de frein principal (3) peut être actionné par la force musculaire, comprenant un actionneur électromécanique (16) avec lequel le cylindre de frein principal (3) peut également être actionné, et comprenant un ressort de rappel (11, 12) qui fait revenir (qui rappelle) le servofrein, après son actionnement, dans sa position de départ, **caractérisé en ce que** le servofrein (3) présente au moins deux ressorts de rappel (11, 12) dont l'un rappelle l'élément de transfert de la force musculaire (19) et dont l'autre rappelle l'actionneur (16) et ne sollicite pas l'élément de transfert de la force musculaire (19), l'actionneur (16) présentant un corps de servofrein télescopique (7) pour le transfert d'une force d'actionneur de l'actionneur électromécanique (16) à un piston (5) du cylindre de frein principal (3).

2. Servofrein électromécanique selon la revendication 1, **caractérisé en ce que** le ressort de rappel (12) pour l'élément de transfert de la force musculaire (19) présente une force de ressort inférieure.

3. Servofrein électromécanique selon la revendication 1, **caractérisé en ce que** l'actionneur (16) présente un moteur électrique (15) et un mécanisme de conversion rotation/translation (13, 14).

4. Servofrein électromécanique selon la revendication 3, **caractérisé en ce que** l'actionneur (16) présente un mécanisme à crémaillère (13, 14) en tant que mécanisme de conversion rotation/translation.

5. Servofrein électromécanique selon la revendication 1, **caractérisé en ce que** le corps de servofrein télescopique (7) se compose d'un tube interne (9) et d'un tube externe (8).

6. Servofrein électromécanique selon la revendication 5, **caractérisé en ce qu'**un premier ressort de rappel (12) presse contre le tube interne (9) et un deuxième ressort de rappel (11) presse contre le tube externe (8).

7. Servofrein électromécanique selon la revendication 6, **caractérisé en ce que** le premier ressort de rappel (12) ainsi que le deuxième ressort de rappel (11) s'appuient tous deux sur le cylindre de frein principal (3).

8. Servofrein électromécanique selon la revendication 6, **caractérisé en ce que** le premier ressort de rappel (11) présente une plus grande force de ressort que le deuxième ressort de rappel (12).

9. Servofrein électromécanique selon la revendication 6, **caractérisé en ce qu'**en cas de panne de l'actionneur (16), l'actionnement du cylindre de frein principal (3) s'effectue uniquement par la force musculaire, seul le premier ressort de rappel (12) étant tendu pour l'actionnement du cylindre de frein principal (3) par la force musculaire.
